# EUROPÄISCHE PATENTSCHRIFT

(11) **EP 2 694 796 B1**
(45) Veröffentlichungstag und Bekanntmachung des Hinweises auf die Patenterteilung: **30.09.2015**
(21) Anmeldenummer: 12715310.4
(22) Anmeldetag: 05.04.2012
(51) Int. Cl.: F02M 63/02, F02M 63/00, F02M 37/00, F02M 31/125, F16K 17/04, F16K 31/122

(54) **SPÜLVENTIL FÜR COMMON-RAIL SCHWERÖL-EINSPRITZSYSTEME**
PRESSURE RELIEF VALVE FOR COMMON RAIL HEAVY OIL INJECTION SYSTEMS
SOUPAPE DE VIDANGE POUR SYSTÈMES D'INJECTION D'HUILE LOURDE À RAMPE COMMUNE

(30) Priorität: 08.04.2011 AT 5072011
(43) Veröffentlichungstag der Anmeldung: 12.02.2014
(73) Patentinhaber: Robert Bosch GmbH, 70469 Stuttgart-Feuerbach (DE)
(72) Erfinder: BERNHAUPT, Martin, A-5411 Oberalm (AT); GRASPEUNTNER, Christian, A-5400 Hallein (AT); SCHNEDT, Johannes, A-5020 Salzburg (AT); STIPEK, Theodor, A-5020 Salzburg (AT)
(86) Internationale Anmeldenummer: PCT/AT2012/000096
(87) Internationale Veröffentlichungsnummer: WO 2012/135885

(56) Entgegenhaltungen:
- EP-A2- 1 314 883
- WO-A2-2010/040163
- DE-A1- 10 047 805
- DE-A1- 10 355 124

## Beschreibung

Die Erfindung betrifft ein Spülventil für Common-Rail SchwerölEinspritzsysteme für Brennkraftmaschinen umfassend einen Ventilkörper, ein im Ventilkörper zwischen einer Öffnungs- und einer Schließstellung bewegliches Ventilglied, das in der Schließstellung mit einem Ventilsitz zusammenwirkt und einen Hochdruckbereich von einem Niederdruckbereich trennt, einen hochdruckseitigen Zulauf, der mit einem Schweröl-Hochdruckspeicher (Rail) verbindbar ist, wenigstens einen niederdruckseitigen Ablauf, der mit einer Rückführungsleitung verbindbar ist, und Betätigungsmittel zum Betätigen des Ventilglieds.

Die Erfindung betrifft weiters eine Kraftstoffversorgungsanlage für Common-Rail Schweröl-Einspritzsysteme für Brennkraftmaschinen mit einem derartigen Spülventil.

Aus Kostengründen werden bei sehr großen Dieselmotoren, insbesondere bei Schiffsdieselmotoren, minderqualitative Kraftstoffe wie beispielsweise Schweröl eingesetzt. Aufgrund der besonderen physikalischen Eigenschaften von Schwerölen müssen für den Betrieb mit Schweröl besondere Vorkehrungen getroffen werden. Beispielsweise ist die Viskosität von Schweröl wesentlich höher als von normalem Dieselkraftstoff, sodass eine Erwärmung auf mehr als 80°C erforderlich ist, damit das Schweröl überhaupt gepumpt werden kann.

Die hohe Viskosität von Schweröl bedingt, dass auch während des Motorstillstands immer Kraftstoff im Leitungssystem im Kreis gepumpt werden muss, um das Festwerden von Schweröl in den Leitungen zu verhindern.

Zu diesem Zweck ist in Common-Rail Schweröl-Einspritzsystemen der eingangs genannten Art ein Spülventil vorgesehen, welches während des Betriebs des Motors geschlossen ist und dabei die hochdruckseitigen Teile des Treibstoffsystems und damit auch das Rail gegenüber einer niederdruckseitigen Treibstoffrückführleitung, durch welche Treibstoff in den Tank rückgeführt werden kann, verschließt. Bei Stillstand des Motors kann nun dieses Spülventil geöffnet werden, sodass Treibstoff von der Hochdruckseite durch die Hochdruckleitungen und das Rail durch das Ventil zur Niederdruckseite und in der Folge in den Tank im Kreis geführt wird, wobei der Treibstoff durch einen Vorwärmer auf einer entsprechenden Temperatur gehalten wird, sodass ein Festwerden des Schweröls in den Leitungen verhindert wird.

Neben der Möglichkeit, eine Kreislaufströmung zur Temperierung des Kraftstoffs im System zu erzeugen, besitzt das Spülventil gleichzeitig auch die Funktion eines Notstoppventils. Das Ventil soll dabei verhindern, dass unzulässig hohe Drucke im Rail zu gefährlichen Zuständen führen. Durch geeignete Ansteuerung des Spülventils kann im Notfall, d.h. z.B. bei Überschreiten eines vorbestimmten Druckniveaus, der Systemdruck sehr schnell abgesenkt werden, ohne dass die Einspritzinjektoren selbst deaktiviert werden müssen.

Als mögliche Ventiltypen für das Spülventil kommen derzeit Schieberventile oder federbelastete Sitzventile zum Einsatz. Schieberventile (siehe z.B. WO 2010/040163 A2) haben den Nachteil, dass bei diesen aufgrund des Konzepts über die Ventilführung ständig Hockdruck anliegt. Dadurch kommt es zu ständigen Leckagen, welche einerseits den Wirkungsgrad des Systems reduzieren und weiters ständig Partikel aus dem Kraftstoff in die Ventilführung spülen, was zu einer Gefahr des Ventilklemmens führen kann. Federbelastete Sitzventile der außenöffnenden Bauart haben den Nachteil, dass sehr hohe Federkräfte erforderlich sind, um das Ventil im Motorbetrieb gegen den hohen Systemdruck (bis 2200bar) abzudichten. Das bedeutet einen sehr großen Bauraum und weiteres sehr hohe Betätigungskräfte, um das Ventil im geöffneten Zustand offen zu halten.

DE 100 478 03 A1 offenbart ein Spülventil für Common-Rail Schweröleinspritzsysteme für Brennkraftmaschinen umfassend einen Ventilkörper, ein im Ventilkörper zwischen einer Öffnungs- und einer Schließstellung bewegliches Ventilglied, das in der Schließstellung mit einem Ventilsitz zusammen wirkt und einen Hochdruckbereich von einem Niederdruckbereich trennt, einen hochdruckseitigen Zulauf, der mit einem Schweröl-Hochdruckspeicher verbindbar ist, wenigstens einen niederdruckseitigen Ablauf, der mit einer Rückführungsleitung verbindbar ist, und Betätigungsmittel zum betätigen des Ventilglieds, wobei das Ventilglied nach innen zur Hochdruckseite öffnet.

Die vorliegende Erfindung zielt daher darauf ab, das Spülventil dahingehend zu verbessern, dass die Leckagemengen und die Klemmgefahr verringert werden. Weiters soll eine zuverlässige Abdichtung auch bei sehr hohem Systemdruck von beispielsweise 2200 bar oder mehr gewährleistet sein. Weiters ist es wünschenswert, die Betätigungskräfte für das Öffnen und Offenhalten des Spülventils zu verringern.

Zur Lösung dieser Aufgabe sieht die Erfindung bei einem Spülventil der eingangs genannten Art vor, dass das Ventilglied nach innen zur Hochdruckseite hin öffnet. Im Gegensatz zu federbelasteten Sitzventilen der außenöffnenden Bauart haben Sitzventile der innenöffnenden Bauart den Vorteil, dass der abzudichtende Raildruck die Dichtwirkung des Spülventils erhöht. Je höher der abzudichtende Druck ist, desto höher sind somit die Dichtkräfte, sodass eine zuverlässige Abdichtung auch bei nahezu beliebig hohen Systemdrucken gewährleistet ist. Weiters ist das Sitzventil der innenöffnenden Bauart leckagefrei, sodass keine zusätzlichen Verluste auftreten und weiters die Gefahr des Klemmens minimiert ist.

Wenn, wie dies einer bevorzugten Weiterbildung entspricht, der hochdruckseitige Zulauf axial zum Ventilglied hinführt, werden darüber hinaus im Hochdruckbereich Verschneidungen vermieden, welche die Dauerfestigkeit des Ventils beeinträchtigen würden.

Zur Betätigung des Ventilglieds muss das Ventilglied erfindungsgemäß nach innen, das heißt zur Hochdruckseite hin geöffnet werden, sodass der im Hochdruckspeicher (Rail) herrschende Druck überwunden werden muss. Die hierzu erforderliche axiale Beaufschlagung des Ventilglieds erfolgt erfindungsgemäß dadurch, dass die Betätigungsmittel einen niederdruckseitig angeordneten, axial verschieblichen Steuerkolben umfassen, der mit dem Ventilglied zusammenwirkt. Die Beaufschlagung erfolgt dabei von der Niederdruckseite aus, sodass eine einfache konstruktive Ausführung gewählt werden und zudem die Baugröße minimiert werden kann. Eine bevorzugte Weiterbildung sieht vor, dass die Betätigungsmittel eine Druckluftquelle umfassen, die an einen druckdichten Raum des Ventilkörpers anschließbar ist, in dem der Steuerkolben oder ein mit dem Steuerkolben verbundenes Teil unter Druckluftbeaufschlagung axial verschiebbar ist. Die Betätigung des Ventilglieds erfolgt also mit Hilfe eines Druckmediums, insbesondere mit Druckluft. Solange die Druckluft am Steuerkolben oder einem mit dem Steuerkolben verbundenen Teil anliegt wird das Ventilglied im geöffneten Zustand gehalten. Wenn das Ventil wieder geschlossen werden soll, wird die Druckluft wieder abgebaut und die Rückstellung des Steuerkolbens bzw. des mit dem Steuerkolben verbundenen Teils erfolgt dann mit Vorteil dadurch, dass der Steuerkolben oder ein mit dem Steuerkolben verbundenes Teil in axialer Richtung von einem Rückstellmittel, insbesondere einer Rückstellfeder, in Schließrichtung des Ventilglieds beaufschlagt ist.

Zur Rückstellung des Ventilglieds können bevorzugt gesonderte Rückstellmittel vorgesehen sein und die Ausbildung ist hierbei bevorzugt derart weitergebildet, dass hochdruckseitig ein das Ventilglied in Richtung zum Ventilsitz beaufschlagendes Rückstellmittel, insbesondere eine Rückstellfeder, angeordnet ist.

Während der hochdruckseitige Zulauf, wie bereits erwähnt, in axialer Richtung erfolgt, ist ein axiales Führen des niederdruckseitigen Ablaufs aufgrund der Anordnung des Steuerkolbens nicht ohne Weiteres möglich bzw. erwünscht. Eine konstruktive besonders vorteilhafte Weiterbildung sieht in diesem Zusammenhang vor, dass der wenigstens eine niederdruckseitige Ablauf von einem niederdruckseitigen Ventilraum quer wegführt, der von einem axialen Teilbereich des Steuerkolbens unter Ausbildung eines Ringraums durchsetzt wird.

Aufgrund der Verwendung von Schweröl als Kraftstoff ist mit Rücksicht auf dessen abrasive Wirkung ein Verschleiß des Ventilglieds, zumindest im Bereich des Ventilsitzes, sowie ein Verschleiß des Ventilsitzes häufig zu beobachten. Vorteilhafterweise sollten daher bauliche Vorkehrungen getroffen werden, um die vom Verschleiß betroffenen Teile in einfacher Weise austauschen zu können. Dies wird gemäß einer bevorzugten Weiterbildung der vorliegenden Erfindung am Einfachsten dadurch erreicht, dass der Ventilsitz an einer vom Ventilkörper gesonderten Hülse vorgesehen ist. Aufgrund der Ausbildung des Ventilsitzes an einem gesonderten Bauteil kann dieser in einfacher Weise entnommen und ausgetauscht werden. Um gleichzeitig eine einfache Entnehmbarkeit und eine sichere Befestigung der genannten Hülse zu erreichen, ist weiters bevorzugt vorgesehen, dass die Hülse in einer axialen Bohrung des Ventilkörpers angeordnet ist und mittels eines in die Bohrung geschraubten Haltelements axial gegen eine durch eine Durchmesserverringerung der Bohrung gebildete Anschlagfläche gedrückt wird.

Das Ventilglied ist im Bereich der Sitzfläche bevorzugt kegelig ausgebildet und wirkt mit einem kegeligen Ventilsitz zusammen, um eine optimale Dichtwirkung zu erreichen.

Gemäß einem weiteren Aspekt der Erfindung wird eine Kraftstoffversorgungsanlage für Common-Rail Schweröleinspritzsysteme für Brennkraftmaschinen geschaffen mit einem Tank, einer Vorförderpumpe zum Fördern von Schweröl vom Tank zu einer Hochdruckpumpe, wobei die Hochdruckpumpe über wenigstens eine Hochdruckleitung mit einem Hochdruckspeicher (Rail) verbunden ist, der wenigstens einen Einspritzinjektor speist, und weiters mit einem erfindungsgemäßen Spülventil, dessen hochdruckseitiger Zulauf mit dem Hochdruckspeicher in Verbindung steht, um wenigstens eine Teilmenge des Schweröls über den niederdruckseitigen Ablauf des Spülventils und eine Rückführungsleitung bevorzugt in den Tank abzusteuern. Um hierbei in einfacher Weise einen Spülkreislauf zu schaffen, ist das Spülventil bevorzugt über einen von den von der Hochdruckpumpe kommenden Hochdruckleitung und von den die Injektoren speisenden Leitungen gesonderten Anschluss an den Hochdruckspeicher (Rail) angeschlossen. Das Spülventil kann hierbei unmittelbar in das Gehäuse des Hochdruckspeichers eingeschraubt oder anderweitig an diesem befestigt sein oder über eine gesonderte Hochdruckleitung mit dem Hochdruckspeicher verbunden sein.

Um bei abgeschaltetem Motor ein Abkühlen des im Kreis gepumpten Kraftstoff zu vermeiden ist bevorzugt vorgesehen, dass zwischen Tank und Vorförderpumpe ein Wärmetauscher zum Vorwärmen des Schweröls angeordnet ist. Der Wärmetauscher kann alternativ auch zum Abkühlen des Schweröls bei laufendem Motor verwendet werden.

Zur Ansteuerung des Spülventils ist mit Vorteil eine elektrische Steuervorrichtung vorgesehen, die je nach Betriebszustand das Spülventil öffnet oder schließt. Die Ausbildung ist hier bevorzugt derart weitergebildet, dass eine Steuervorrichtung vorgesehen ist, die mit dem Spülventil zum Öffnen des Ventils beim Stillstand der Brennkraftmaschine zusammenwirkt, wodurch die Spülfunktion des Spülventils realisiert wird. Zur Realisierung der Notstoppfunktion des Ventil ist bevorzugt vorgesehen, dass ein Drucksensor zur Erfassung des Innendrucks des Hochdruckspeichers (Rails) vorgesehen ist, der mit einer Steuervorrichtung derart zusammenwirkt, dass das Spülventil bei Überschreiten eines vorgegebenen Grenzdrucks öffnet.

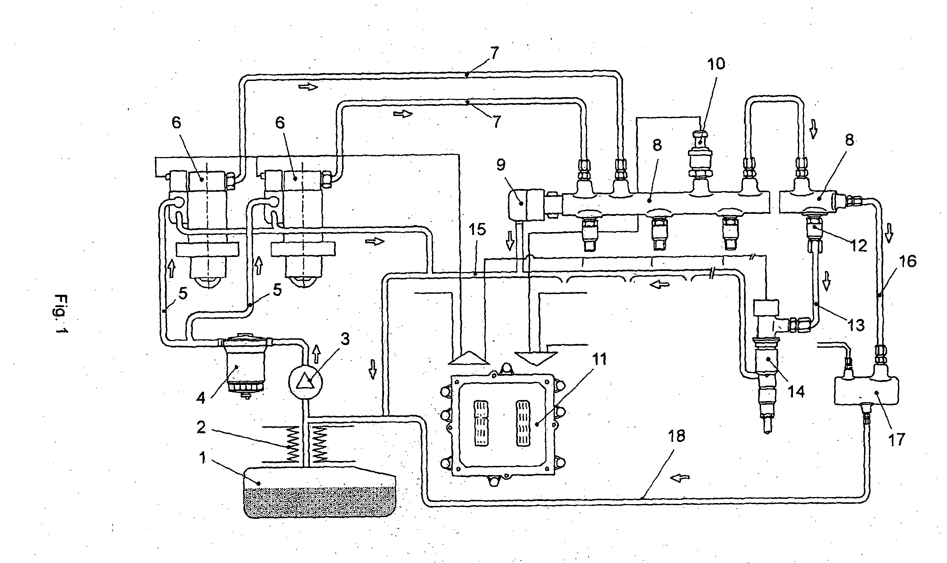

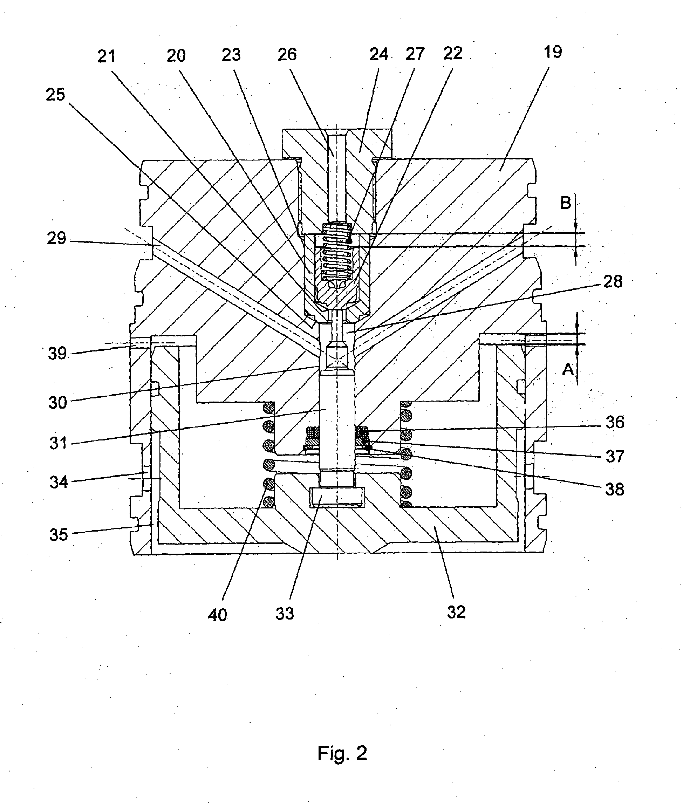

Die Erfindung wird nachfolgend anhand eines in der Zeichnung schematisch dargestellten Ausführungsbeispiels näher erläutert. In dieser zeigen Fig. 1 ein Common-Rail Schweröl-Einspritzsystem, in welchem das erfindungsgemäße Spülventil zum Einsatz kommen kann und Fig. 2 ein erfindungsgemäßes Spülventil im Schnitt.

In Fig. 1 ist ein Common-Rail Schweröl-Einspritzsystem schematisch dargestellt. Vom Tank 1 wird von einer Vorförderpumpe 3 Kraftstoff, der im Vorwärmer 2 erwärmt wurde, über einen Kraftstofffilter 4 und Kraftstoffleitungen 5 zumindest einer Hochdruckpumpe 6 zugeführt, wo der Kraftstoff auf Systemdrücke von höher als 1400 bar, insbesondere auf bis zu 2200 bar verdichtet wird. Der verdichtete Kraftstoff gelangt über Hochdruckleitungen 7 in zumindest ein Rail 8, das unter anderem mit zumindest einem Druckbegrenzungsventil 9 und einem Raildrucksensor 10 ausgestattet ist. Der Druck im Rail 8 wird durch Regelung der von der Hochdruckpumpe 6 in die Hochdruckleitung 7 geförderten Kraftstoffmenge durch das Steuergerät 11 eingestellt. Vom Rail 8 ausgehend gelangt der Kraftstoff über einen Durchflussbegrenzer 12 über die Hochdruckleitung 13 in den Einspritzinjektor 14, der ebenfalls vom Steuergerät 11 angesteuert wird. Die zur Funktion des Einspritzinjektors 14 erforderliche Kraftstoffsteuermenge gelangt über die Niederdruckleitungen 15 wieder zurück in den Tank 1. Um auch während des Stillstands des Motors eine Zirkulation des Kraftstoffs im Leitungssystem gewährleisten zu können, führt vom Rail 8 ausgehend eine weitere Hochdruckleitung 16 zu einem Spülventil 17, das angesteuert vom Steuergerät 11 eine Teilmenge des Kraftstoffs direkt in Niederdruckleitungen 18 absteuern kann, die direkt zurück zum Tank 1 führen.

Die Funktionen des Spülventils 17 und des Druckbegrenzungsventils 9 können im Spülventil 17 vereinigt werden, wenn das Spülventil 17 eine Druckbegrenzungsfunktion aufweist. Das separate Druckbegrenzungsventil 9 kann bei dieser alternativen Ausführung somit entfallen.

Fig. 2 zeigt einen Schnitt durch das Spülventil 17. Das Spülventil 17 umfasst einen Ventilkörper 19 und eine Ventilhülse 20, welche einen Ventilsitz 21 aufweist, mit welchem eine Sitzfläche des Ventilglieds 22 zusammenwirkt. Die Ventilhülse 20 ist in einer Bohrung 23 des Ventilkörpers 19 aufgenommen und wird mit Hilfe einer Verschraubung 24 gegen eine Anschlagfläche 25 gedrückt. Der Verschraubungsteil 24 weist einen Zulauf 26 für aus dem Hochdruckspeicher kommenden Hochdruckkraftstoff auf. Die Ventilfeder, welche das Ventilglied 22 in Richtung zum Ventilsitz 21 beaufschlagt, ist mit 27 bezeichnet.

Niederdruckseitig weist das Spülventil einen Ventilraum 28 auf, von dem zwei Ablaufbohrungen 29 quer wegführen. Der Ventilraum 28 ist in einer Bohrung 30 ausgebildet, in welcher ein Steuerkolben 31 axial verschiebbar geführt ist. Im den Ventilraum 28 durchsetzenden Bereich ist der Steuerkolben 31 hierbei mit verringertem Durchmesser ausgebildet, sodass ein Ringraum verbleibt. Der Steuerkolben 31 wirkt mit der Stirnfläche des Ventilglieds 22 zusammen und kann das Ventilglied 22 somit in axialer Richtung betätigen. Zur Abdichtung des Steuerkolbens 31 innerhalb der Bohrung 30 sind eine Dichtung 36, eine Scheibe 37 und ein Sicherungsring 38 vorgesehen. Zur axialen Verschiebung des Steuerkolbens 31 ist ein weiterer Kolben 32 vorgesehen, in dem ein Kopfteil 33 des Steuerkolbens 31 formschlüssig aufgenommen ist. Der weitere Kolben 32 wird mit Hilfe einer Druckfeder 40 in Richtung zum nicht dargestellten Deckel des Spülventils beaufschlagt. Der Ventilkörper 19 weist einen Druckluftanschluss 34 auf, der mit dem vom Ventilkörper 19, dem nicht dargestellten Ventildeckel und dem topfförmig ausgebildeten weiteren Kolben 32 in Verbindung steht.

Die Funktionsweise des erfindungsgemäßen Spülventils ist wie folgt. Im Betriebszustand des Motors steht über den Zulauf 26 der Systemdruck (bis zu 2200 bar) an dem Ventil an. Am Ventilsitz 21 wird der Systemdruck gegen den Niederdruckbereich augedichtet. Falls nun der Druck im Hochdruckbereich abgebaut werden muss, was bspw. bei einem Notstopp, beim normalen Motorstopp mit nachfolgender Spülung des Hochdrucksystems oder auch im Falle einer Wartung erforderlich ist, wird der Kolben 32 von unten mit Druckluft über den Druckluftanschluss 34 beaufschlagt. Über den Hub A hebt der Steuerkolben 31 dabei das Ventilglied 22 bis zum Erreichen des Hubanschlags unter Überwindung des Ventilgliedhubs B an. Während des Hubs wird die Luft zwischen dem Ventilkörper 19 und dem Kolben 32 über die Bohrungen 39 verdrängt. Das Ventilglied 22 wird vollständig aus dem Ventilsitz 21 gehoben, sodass für den Spülvorgang der entsprechende Querschnitt zur Verfügung steht und die Spülmenge über den Ablauf 29 abgeführt werden kann. Wenn der Motor wieder gestartet werden soll wird die Druckluft wieder abgebaut, worauf der Kolben 32 aufgrund der Wirkung der Feder 40 und das Ventilglied 22 aufgrund der Wirkung der Feder 27 wieder in die Ausgangslage gebracht werden und das Ventil geschlossen wird.

Die Montage des erfindungsgemäßen Spülventils erfolgt wie folgt. Zuerst werden die Hülse 20, das Ventilglied 22 und die Feder 27 in die Bohrung 23 eingelegt und die Verschraubung 24 mit einem entsprechenden Drehmoment in den Ventilkörper 19 eingeschraubt. In der Folge werden die Dichtung 36, die Scheibe 37, der Sicherungsring 38 und die Druckfeder 33 in den Ventilkörper 19 eingesetzt bzw. eingelegt. Schließlich kann der Steuerkolben 31 in den Kolben 32 eingelegt und zusammen in den Ventilkörper 19 eingefügt werden.

## Patentansprüche

1. Spülventil für Common-Rail Schweröl-Einspritzsysteme für Brennkraftmaschinen umfassend
- einen Ventilkörper (19),
- ein im Ventilkörper (19) zwischen einer Öffnungs- und einer Schließstellung bewegliches Ventilglied (22), das in der Schließstellung mit einem Ventilsitz (21) zusammen wirkt und einen Hochdruckbereich von einem Niederdruckbereich trennt,
- einen hochdruckseitigen Zulauf (26), der mit einem SchwerÖl-Hochdruckspeicher (Rail) (8) verbindbar ist,
- wenigstens einen niederdruckseitigen Ablauf (29), der mit einer Rückführungsleitung (18) verbindbar ist, und
- Betätigungsmittel zum Betätigen des Ventilglieds (22),
wobei das Ventilglied (22) nach innen zur Hochdruckseite hin öffnet, **dadurch gekennzeichnet, dass** die Betätigungsmittel zum Öffnen des Ventils einen niederdruckseitig angeordneten, axial verschieblichen Steuerkolben (31) umfassen, der mit dem Ventilglied (22) zusammenwirkt, wobei die Betätigung des Ventilglieds (22) mit Hilfe eines Druckmediums erfolgt.

2. Spülventil nach Anspruch 1, **dadurch gekennzeichnet, dass** die Betätigungsmittel eine Druckluftquelle umfassen, die an einen druckdichten Raum (35) des Ventilkörpers (19) anschließbar ist, in dem der Steuerkolben (31) oder ein mit dem Steuerkolben (31) verbundenes Teil (32) unter Druckluftbeaufschlagung axial verschiebbar ist.

3. Spülventil nach Anspruch 1 oder 2, **dadurch gekennzeichnet, dass** der Steuerkolben (31) oder ein mit dem Steuerkolben (31) verbundenes Teil (32) in axialer Richtung von einem Rückstellmittel, insbesondere einer Rückstellfeder (40), in Schließrichtung des Ventilglieds beaufschlagt ist.

4. Spülventil nach einem der Ansprüche 1, 2 oder 3, **dadurch gekennzeichnet, dass** hochdruckseitig ein das Ventilglied (22) in Richtung zum Ventilsitz (21) beaufschlagendes Rückstellmittel, insbesondere eine Rückstellfeder (27), angeordnet ist.

5. Spülventil nach einem der Ansprüche 1 bis 4, **dadurch gekennzeichnet, dass** der wenigstens eine niederdruckseitige Ablauf (29) von einem niederdruckseitigen Ventilraum (28) quer wegführt, der von einem axialen Teilbereich des Steuerkolbens (31) unter Ausbildung eines Ringraums durchsetzt wird.

6. Spülventil nach einem der Ansprüche 1 bis 5, **dadurch gekennzeichnet, dass** der Ventilsitz (21) an einer vom Ventilkörper (19) gesonderten Hülse (20) vorgesehen ist.

7. Spülventil nach Anspruch 6, **dadurch gekennzeichnet, dass** die Hülse (20) in einer axialen Bohrung (23) des Ventilkörpers (19) angeordnet ist und mittels eines in die Bohrung (23) geschraubten Haltelements (24) axial gegen eine durch eine Durchmesserverringerung der Bohrung (23) gebildete Anschlagfläche (25) gedrückt wird.

8. Kraftstoffversorgungsanlage für Common-Rail Schweröl-Einspritzsysteme für Brennkraftmaschinen mit einem Tank (1), einer Vorförderpumpe (3) zum Fördern von Schweröl vom Tank (1) zu einer Hochdruckpumpe (6), wobei die Hochdruckpumpe (6) über wenigstens eine Hochdruckleitung (7) mit einem Hochdruckspeicher (Rail) (8) verbunden ist, der wenigstens einen Einspritzinjektor (14) speist, und weiters mit einem Spülventil (17) nach einem der Ansprüche 1 bis 7, dessen hochdruckseitiger Zulauf (26) mit dem Hochdruckspeicher (8) in Verbindung steht, um wenigstens eine Teilmenge des Schweröls über den niederdruckseitigen Ablauf (29) des Spülventils (17) und eine Rückführungsleitung (18) bevorzugt in den Tank (1) abzusteuern.

9. Kraftstoffversorgungsanlage nach Anspruch 8, **dadurch gekennzeichnet, dass** das Spülventil (17) über einen von den von der Hochdruckpumpe (6) kommenden Hochdruckleitung (7) und von den die Injektoren (14) speisenden Leitungen (13) gesonderten Anschluss (16) an den Hochdruckspeicher (Rail) (8) angeschlossen ist.

10. Kraftstoffversorgungsanlage nach Anspruch 8 oder 9, **dadurch gekennzeichnet, dass** zwischen Tank (1) und Vorförderpumpe (3) ein Vorwärmer (2) zum Vorwärmen des Schweröls angeordnet ist.

11. Kraftstoffversorgungsanlage nach Anspruch 8, 9 oder 10, **dadurch gekennzeichnet, dass** eine Steuervorrichtung (11) vorgesehen ist, die mit dem Spülventil (17) zum Öffnen des Ventils beim Stillstand der Brennkraftmaschine zusammenwirkt.

12. Kraftstoffversorgungsanlage nach einem der Ansprüche 8 bis 11, **dadurch gekennzeichnet, dass** ein Drucksensor (10) zur Erfassung des Innendrucks des Hochdruckspeichers (Rails) (8) vorgesehen ist, der mit einer Steuervorrichtung (11) derart zusammenwirkt, dass das Spülventil (17) bei Überschreiten eines vorgegebenen Grenzdrucks öffnet.

## Claims

1. Purge valve for common-rail heavy-oil injection systems for internal combustion engines, comprising
- a valve body (19),
- a valve element (22) which is movable in the valve body (19) between an open position and a closed position and which, in the closed position, interacts with a valve seat (21) and separates a high-pressure region from a low-pressure region,
- a high-pressure side inlet (26) which is connectable to a heavy-oil high-pressure accumulator (rail) (8),
- at least one low pressure-side outlet (29) which is connectable to a return line (18), and
- actuating means for actuating the valve element (22),
wherein the valve element (22) opens inwardly toward the high-pressure side, **characterized in that** the actuating means for opening the valve comprise an axially displaceable control piston (31) which is arranged on the low-pressure side and which interacts with the valve element (22), wherein the actuation of the valve element (22) is performed by way of a pressure medium.

2. Purge valve according to Claim 1, **characterized in that** the actuating means comprise a compressed-air source which is connectable to a pressure-tight chamber (35) of the valve body (19), in which chamber the control piston (31), or a part (32) connected to the control piston (31), is axially displaceable under the action of compressed air.

3. Purge valve according to Claim 1 or 2, **characterized in that** the control piston (31) or a part (32) connected to the control piston is acted on in an axial direction in the closing direction of the valve element by a restoring means, in particular a restoring spring (40).

4. Purge valve according to one of Claims 1, 2 or 3, **characterized in that** a restoring means, in particular a restoring spring (27) which acts on the valve element (22) in the direction of the valve seat (21) is arranged on the high-pressure side.

5. Purge valve according to one of Claims 1 to 4, **characterized in that** the at least one low pressure-side outlet (29) leads away transversely from a low pressure-side valve chamber (28) which is extended through by an axial sub-region of the control piston (31), thus forming an annular chamber.

6. Purge valve according to one of Claims 1 to 5, **characterized in that** the valve seat (21) is provided on a sleeve (20) which is separate from the valve body (19).

7. Purge valve according to Claim 6, **characterized in that** the sleeve (20) is arranged in an axial bore (23) of the valve body (19) and, by means of a holding element (24) screwed into the bore (23), is pressed axially against an abutment surface (25) formed by reduction in diameter of the bore (23).

8. Fuel supply system for common-rail heavy-oil injection systems for internal combustion engines, having a tank (1), having a predelivery pump (3) for delivering heavy oil from the tank (1) to a high-pressure pump (6), wherein the high-pressure pump (6) is connected via at least one high-pressure line (7) to a high-pressure accumulator (rail) (8) which provides a feed to at least one injector (14), and furthermore having a purge valve (17) according to one of Claims 1 to 7, the high pressure-side inlet (26) of which purge valve is connected to the high-pressure accumulator (8) in order to discharge at least a partial amount of the heavy oil via the low pressure-side outlet (29) of the purge valve (17), and via a return line (18), preferably into the tank (1).

9. Fuel supply system according to Claim 8, **characterized in that** the purge valve (17) is connected to the high-pressure accumulator (rail) (8) via a port (16) which is separate from the high-pressure line (7) passing from the high-pressure pump (6) and separate from the lines (13) which provide a feed to the injectors (14).

10. Fuel supply system according to Claim 8 or 9, **characterized in that** a preheater (2) for preheating the heavy oil is arranged between the tank (1) and predelivery pump (3).

11. Fuel supply system according to Claim 8, 9 or 10, **characterized in that** a control device (11) is provided which interacts with the purge valve (17) in order to open the valve when the internal combustion engine is at a standstill.

12. Fuel supply system according to one of Claims 8 to 11, **characterized in that** a pressure sensor (10) is provided for detecting the internal pressure of the high-pressure accumulator (rail) (8), which pressure sensor interacts with a control device (11) such that the purge valve (17) opens in the event of a predefined threshold pressure being overshot.

## Revendications

1. Soupape de vidange pour systèmes d'injection d'huile lourde à rampe commune pour des moteurs à combustion interne comprenant
- un corps de soupape (19),
- un organe de soupape (22) déplaçable dans le corps de soupape (19) entre une position d'ouverture et une position de fermeture, qui coopère dans la position de fermeture avec un siège de soupape (21) et sépare une zone à haute pression d'une zone à basse pression,
- une conduite d'amenée du côté à haute pression (26), qui peut être reliée avec un accumulateur d'huile lourde à haute pression (rail) (8),
- au moins une conduite d'évacuation du côté à basse pression (29) qui peut être reliée avec une conduite de réintroduction (18) et
- des moyens d'actionnement pour actionner l'organe de soupape (22),
dans laquelle l'organe de soupape (22) est ouvert vers l'intérieur en allant vers le côté à haute pression, **caractérisée en ce que** les moyens d'actionnement pour ouvrir la soupape comprennent un piston de commande (31) déplaçable axialement, disposé du côté à basse pression, qui coopère avec l'organe de soupape (22), dans laquelle l'actionnement de l'organe de soupape (22) a lieu à l'aide d'un fluide pressurisé.

2. Soupape de vidange selon la revendication 1, **caractérisée en ce que** les moyens d'actionnement comprennent une source d'air pressurisé, qui peut être raccordée à un espace étanche à la pression (35) du corps de soupape (19), dans lequel le piston de commande (31) ou une pièce (32) reliée au piston de commande (31) peut être déplacé (e) axialement avec une sollicitation d'air pressurisé.

3. Soupape de vidange selon la revendication 1 ou 2, **caractérisée en ce que** le piston de commande (31) ou une pièce (32) reliée au piston de commande (31) est sollicité(e) dans la direction axiale par un moyen de rappel, notamment un ressort de rappel (40), dans la direction de fermeture de l'organe de soupape.

4. Soupape de vidange selon une des revendications 1, 2 ou 3, **caractérisée en ce que** du côté à haute pression est disposé un moyen de rappel sollicitant l'organe de soupape (22) dans la direction du siège de soupape (21), notamment un ressort de rappel (27).

5. Soupape de vidange selon une des revendications 1 à 4, **caractérisée en ce que** l'au moins une conduite d'évacuation du côté à basse pression (29) part transversalement d'un espace de soupape (28) du côté à basse pression, qui est traversé par une zone partielle axiale du piston de commande (31) en formant un espace annulaire.

6. Soupape de vidange selon une des revendications 1 à 5, **caractérisée en ce que** le siège de soupape (21) est prévu sur un manchon (20) distinct du corps de soupape (19).

7. Soupape de vidange selon la revendication 6, **caractérisée en ce que** le manchon (20) est disposé dans un alésage axial (23) du corps de soupape (19) et est pressé au moyen d'un élément de retenue (24) vissé dans l'alésage (23) axialement contre une surface de butée (25) formée par un rétrécissement de diamètre de l'alésage (23).

8. Installation d'alimentation en carburant pour systèmes d'injection d'huile lourde à rampe commune pour moteurs à combustion interne comportant un réservoir (1), une pompe de préalimentation (3) pour transporter de l'huile lourde du réservoir (1) jusqu'à une pompe à haute pression (6), dans laquelle la pompe à haute pression (6) est reliée par l'intermédiaire d'au moins une conduite à haute pression (7) avec un accumulateur à haute pression (rail) (8), qui alimente au moins un injecteur d'injection (14), et en outre avec une soupape de vidange (17) selon une des revendications 1 à 7, dont la conduite d'amenée du côté à haute pression (26) est en liaison avec l'accumulateur à haute pression (8), afin de détourner au moins une quantité partielle d'huile lourde par l'intermédiaire de la conduite d'évacuation (29) du côté à basse pression de la soupape de vidange (17) et d'une conduite de réintroduction (18) de préférence dans le réservoir (1).

9. Installation d'alimentation en carburant selon la revendication 8, **caractérisée en ce que** la soupape de vidange (17) est raccordée par l'intermédiaire d'un raccord (16) distinct de la conduite à haute pression (7) venant de la pompe à haute pression (6) et des conduites (13) alimentant les injecteurs (14) à l'accumulateur à haute pression (rail) (8) .

10. Installation d'alimentation en carburant selon la revendication 8 ou 9, **caractérisée en ce qu'**entre le réservoir (1) et la pompe de préalimentation (3), un dispositif de préchauffage (2) pour préchauffer l'huile lourde est disposé.

11. Installation d'alimentation en carburant selon la revendication 8, 9 ou 10, **caractérisée en ce qu'**un dispositif de commande (11) est prévu, qui coopère avec la soupape de vidange (17) pour ouvrir la soupape lors de l'arrêt du moteur à combustion interne.

12. Installation d'alimentation en carburant selon une des revendications 8 à 11, **caractérisée en ce qu'**un capteur de pression (10) pour détecter la pression interne de l'accumulateur à haute pression (rail) (8) est prévu, lequel coopère avec un dispositif de commande (11) de telle sorte que la soupape de vidange (17) s'ouvre lorsqu'une pression limite prescrite est dépassée.
